# EUROPEAN PATENT SPECIFICATION

(11) **EP 3 953 139 B1**
(45) Date of publication and mention of the grant of the patent: **17.07.2024**
(21) Application number: 20723934.4
(22) Date of filing: 10.04.2020
(51) Int. Cl.: B29C 45/76

(54) **METHOD AND SYSTEM FOR PROCESSING DATA RELATING TO AN INJECTION MOLDING PROCESS**
VERFAHREN UND SYSTEM ZUR VERARBEITUNG VON DATEN BEZÜGLICH EINES SPRITZGIESSVERFAHRENS
PROCÉDÉ ET SYSTÈME DE TRAITEMENT DE DONNÉES RELATIVES À UN PROCESSUS DE MOULAGE PAR INJECTION

(30) Priority: 12.04.2019 IT 201900005644
(43) Date of publication of application: 16.02.2022
(73) Proprietor: Inglass S.p.A., 31020 San Polo di Piave (Treviso) (IT)
(72) Inventor: LAMONATO, Marco, 31020 San Polo di Piave (TV) (IT)
(74) Representative: Citron, Massimiliano
(86) International application number: PCT/IB2020/053443
(87) International publication number: WO 2020/208599

(56) References cited:
- AT-U1- 11 172
- US-A1- 2004 093 114
- US-A1- 2006 082 009
- US-A1- 2014 046 465
- US-A1- 2015 106 912

## Description

The invention relates to a method and system for managing, in particular archiving, data or parameters relating to an injection molding process.

In general, the definition of the final molding or set-up parameters in an injection molding press requires a large number of repeated molding tests and a long period of manual setting, since everything depends on the know-how and experience of the operator who programs the press.

Even the operator assigned to the press can change frequently, and often a less experienced one arrives. This means that the old set-up parameters can be further upset.

As the presses are very different from each other, and an ad hoc programming is always needed, knowledge of the peculiar characteristics of the press is essential for optimizing start-up times.

Once an optimal quality is achieved in the molded part, the operator must transcribe into a card all the latest parameters (identifiers and/or set-up or working parameters) of the press, thus sanctioning how the piece will be produced in the future.

Filling out the card is not easy. It's a long and boring job, prone to errors due to distraction or fatigue. If even a single parameter is incorrectly or incompletely transcribed, the card is practically useless. There is also no data archiving standard.

The same applies to the programming of the press with the set-up parameters, nowadays to be entered manually or via laborious data transfer procedures.

It would be useful, then, to have a way to generate an aforementioned card, or an equivalent report, automatically and reliably, and this is the object of the invention.

It would be useful to have a way to easily program an injection press with set-up parameters, automatically and reliably, and to this another object of the invention is directed.

US 2015/106912 A1, US 2014/046465 A1, US 2006/082009 A1, AT 11 172 U1 and US 2004/093114 A1 disclose systems for process data management in the field of injection molding.

The main object of the invention is to improve this state of the art.

Another object is to speed up and/or standardize the compilation operations of the aforementioned data card or equivalent report.

Another object is to speed up and/ or standardize the programming operations of the press.

A method is presented for managing data relating to an injection molding process contained in a memory of an electronic control unit placed onboard an injection molding press,
the electronic control unit processing the data to perform the molding process,
with the step of communicating said data between the memory and the outside of the press by means of a graphic code readable by an electronic device.

The use of the code readable by an electronic device simplifies the data transmission and minimizes the risk of errors.

According to a variant of the method, said communicating step comprises the step of reading data from the memory, encoding them into said code and making the code available outside the press. The advantage is that the readable code simplifies the transmission of data to the outside of the press.

According to a variant of the method, said communicating step comprises the step of decoding said code readable by an electronic device, extracting data therefrom and write the extracted data in the memory. The advantage is that the use of the code simplifies the programming of the press and minimizes the risk of errors.

Preferably, the method comprises the further step of acquiring and/or receiving the code and the data contained therein via an electronic portable device external to the press.

In a variant, in the method the abovementioned generated graphic code is presented on a display of the press, e.g. a monitor or a touch screen.

If the parameters are too many for a single graphic code or QR code, a variant of the method envisages the steps of:
- partitioning the internal data or the parameters into subgroups,
- generating n (n>1) graphic codes or QR codes and encoding in each n-th code a subgroup of internal data or parameters, and
- outputting the n codes, e.g. by presenting them on a monitor, in sequence and/or cyclically.

In a variant of the method, data relating to an injection molding process are archived by means of an injection molding press programmed electronically for
- identifying a group of pre-established data internal to the memory, e.g. operating parameters of the press, and
- outputting a code, which can be acquired from an electronic device external to the press, in which the group of internal data is encoded.

The generation of the code avoids manual compilation errors for the operator who works on the press, and speeds up the data transfer.

In a variant, the press is equipped with means for generating and/or displaying said code and/or making said code available for transmission.

Preferably, said press internal data coded in the code are: molding process data (in particular detected by sensors onboard the press) and/or press set-up parameters.

Specifically, said data may be chosen for example in the following list (if the method is applied to presses for metallic materials, a part of the following data will be replaced):
- Mold closing force;
- Cylinder heating zone temperatures;
- Hot runner heating zone temperatures;
- Mold temperature-conditioners temperature;
- Actual dosage position/volume (injection start);
- Actual switching position/volume (switch-over point);
- Actual position/volume of cushion;
- Speed profile;
- Injection time (filling);
- Hold pressure profile;
- Actual time of holding;
- Actual maximum injection pressure;
- Actual switching pressure;
- Pressure of pressure sensors;
- Temperature of temperature sensors;
- Cooling time;
- Mold opening time;
- Mold closing time;
- Total cycle time;
- Opening/closing trigger for shutters;
- Opening/closing values for shutters.

Another aspect of the invention is an injection molding press comprising a memory,
an electronic control unit connected to the memory for accessing data and programmed for
processing the data to carry out the molding process, and
communicating said data between the memory and the outside of the press through a graphic code readable by an electronic device.

According to a variant, the press comprises an electronic device for decoding said code readable by an electronic device, extracting data therefrom and writing the extracted data to the memory.

According to a variant, the press comprises an electronic device for reading said code, e.g. a barcode or QR code reader.

According to a variant, the press comprises an electronic device for reading data from the memory, encoding them into said code and making the code available outside the press. For this purpose the press preferably comprises an electronic display to display the code and/or a data transmission stage for transmitting the generated code to a remote receiver, e.g. a Wi-Fi stage, a Bluetooth stage or a network board.

In the variants, it is preferable that the electronic control unit is programmed for managing the data flow and for controlling the aforementioned electronic devices.

Preferably, the press comprises:
means for generating the aforementioned graphic code, e.g. a barcode generator, a OR generator or an image generator. For this purpose the press comprises a monitor or touch screen by which to show the graphic code; and/or
means for generating a signal which can be acquired by the electronic device, such as a sound signal generator (e.g. speech recognition) or a data string generator via USB port;
means for transceiving a radio or WI-FI or Bluetooth^{®} signal.

Another aspect of the invention is a system comprising:
- a remote computer database containing data (preferably identifiers and/or set-up and/or working parameters) relating to an injection molding process,
- an injection press as defined above;
- an electronic device for acquiring and/or transmitting the code and programmed for extracting from the read or acquired code, a digital data and electronically transmitting the extracted digital data to the remote database.

Another aspect of the invention is a software program comprising instructions that, when loaded and executed on a microprocessor of the press, perform the steps of the aforementioned method relating to the operation of the press.

In the various aspects of the invention, the remote computer database may be e.g. a memory area on a remote computer or server, such as a website. In this way a historical archive of the parameters or internal data of the press can be concentrated in the Database, which various distant operators can access.

For the program or software, or for the location of the remote Database, there are different implementation variations.

E.g. said program or said remote database may be embedded into a simulation software for an injection molding process.

E.g. said program may be stored on a server which may be the same on which the remote database is stored or another server.

E.g. said program may be stored in a local memory in the portable device or on a physical medium external to the portable device itself.

If the code is read with a smartphone, the invention comprises as a further aspect a software program structured like an APP for performing a or each step of the above method relating to the operation of the portable electronic device.

The term press is meant to include preferably also other devices of the injection cell, for example an electronic control unit for thermal regulation or material conditioning.

In the various aspects of the invention, the portable electronic device may advantageously be a mobile phone or a smartphone, or a tablet. Thus the operator can read the parameters or the internal press data through an object he already possesses and/or that hinders him little.

Preferably, in the various aspects of the invention said graphic code may be read by the electronic device also through OCR recognition.

In a variant of each aspect of the invention, the aforementioned generated graphic code is stored on a data medium, e.g. printed on paper or saved on a USB stick or hard disk or on a data medium such as CD or DVD.

The advantages of the invention will be even clearer from the following description of a preferred system, in which reference is made to the attached drawing in which
- Figure 1 shows a block diagram for an injection molding press;
- Figure 2 shows a schematic view of an injection molding press;
- Figure 3 shows a schematic view of a system of injection press and Database.

In the figures: equal numerical references indicate equal elements, and the parts are described as in use.

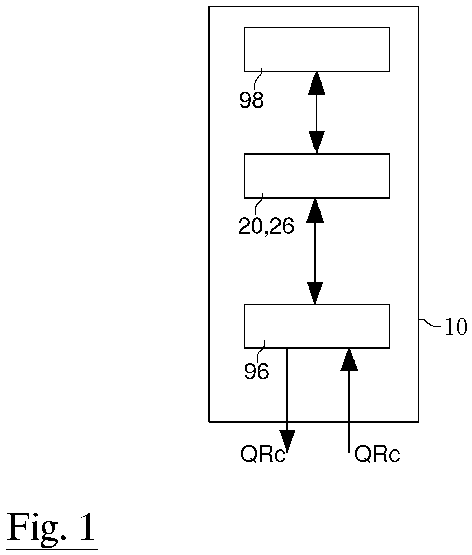

Fig. 1 shows a general scheme of a press 10 for injection molding.

The press 10 comprises an electronic control unit or microprocessor 20 connected to a memory 98 and to a coding/decoding stage 96. The arrows here indicate a data flow.

In the memory 98 data can be stored and accessed to perform a molding process, while the stage 96 serves to generate a code embedding data taken from the memory 98 or to decode an external code to extract data to be saved in the memory 98.

The structure of fig. 1 allows the press 10 to communicate data unidirectionally or bidirectionally between the memory 98 and the outside via a QR code readable by an electronic device.

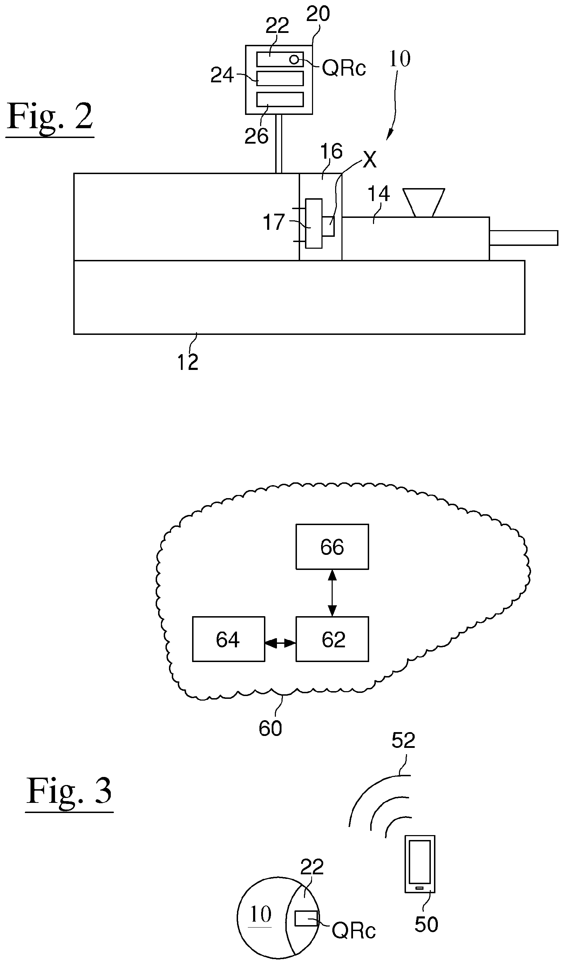

The machine 10 has a more peculiar structure e.g. like the one in fig. 2, showing an injection device 14, arranged on a base 12 and equipped with a mold 16 with one or more hot runners 17.

A control unit 20, provided with intelligence, drives the various members of the molding machine during the molding phases, and comprises a display 22 and an operating panel 24 (e.g. a keyboard or touch screen). The control unit 20 is e.g. connected - in a known way - both to actuators (not shown) to move parts of the mold and injectors, and/or to sensors to detect the state of the actuators and mold. The control unit 20 also comprises a computer or microprocessor 26, connected to the panel 24.

Hereinafter, with reference to fig. 2, the case of data sent by the memory 98 to the outside the press 10 is described.

The control unit 20 is programmed to code - via the stage 96 - within a QR code, indicated here with QRc, a certain group of operation parameters of the press 10, e.g. read from the memory 98, and to show the code QRc on the display 22.

With reference to fig. 3, an operator, equipped with a cellphone or smartphone 50, can read the code QRc from the display 22 with the image sensor provided in the mobile phone or smartphone 50. On the smartphone 50 e.g. an App is loaded and runs to read the QRc code and extract and/or generate therefrom operating parameters of the machine 10.

The code QRc and/or the data contained in it are then transmitted by the smartphone 50, via GSM or the Internet, to a remote computer database 60, e.g. a Server, via a wireless or wired signal 52.

The signal 52 is received by a receiver stage 64 and processed by a microprocessor stage 62 (e.g. a PC or Server), which can access a data archive or memory 66. The microprocessor stage 62 stores the data contained in the signal 52 in the data archive or memory 66 by associating them with a particular machine 10 and/or to a specific molding process.

In this way the parameters of the press 10 arrive quickly and without compilation errors in the data archive or memory 66. Note that the data flow illustrated in fig. 3 also allows to standardize the transfer of the parameters of the press 10 towards the data archive or memory 66.

Note that the smartphone 50 is just a preferred example of an interface to interact with the remote computer database 60, but the user could use an equivalent portable detecting device, e.g. a tablet, a terminal or a dedicated device.

The remote computer database 60 is preferably structured as a web site, accessible via the Internet, but not necessarily.

In a variant, the control unit 20 is programmed to encode the code QRc and transmit it to a remote receiver via a wireless signal, like a radio signal.

The case is now described of data sent to the memory 98 from outside the press 10.

The control unit 20 is programmed to decode with the stage 96 a QR code, indicated with QRc in fig. 1, to extract data, e.g. operation parameters of the press 10, then written to the memory 98 by the unit 20.

The code QRc is acquired through e.g. an image reader that is part of the press 10 or mounted onboard the press 10. Or the image reader is accessory to the press 10, or external and separate from the press 10, in particular (see fig. 3) the code can be acquired with the smartphone 50 and then from this sent to the press 10.

The code QRc may be created/generated and made available to the operator and the database 60 at each molding cycle, or at different and programmable working intervals. Likewise each created code QRc may include all or only part of the data and/or parameters available in the memory 98.

In general, the code QRc may also contain any type of information of the press 10, which can preferably be a injection press for molded plastic material but also a press for metallic materials.

## Claims

1. Method for managing data relating to an injection molding process contained in a memory of an electronic control unit placed onboard an injection press, the electronic control unit processing the data to perform the molding process,
**characterized by**
the step of communicating said data between the memory and the outside of the press by means of a graphic code readable by an electronic device.

2. Method according to claim 1, wherein said step of communicating comprises the step of reading data from the memory, encoding them into said graphic code and making the graphic code available outside the press.

3. Method according to claim 1 or 2, wherein said step of communicating comprises the step of decoding said graphic code readable by an electronic device, extracting data therefrom and writing the extracted data in the memory.

4. Method according to any previous claim, comprising the step of acquiring and/or receiving the graphic code and/or data contained therein by means of a portable electronic device external to the press.

5. Method according to any previous claim, wherein the generated graphic code is presented on a display of the press, e.g. a monitor or a touch screen.

6. Method according to any previous claim, with the additional steps of:
- partitioning the internal data or the parameters into subgroups,
- generating n, n > 1, graphic codes or QR codes and encoding in each n-th code a subgroup of internal data or parameters, and
- outputting the n codes in sequence and/or cyclically.

7. Method according to any previous claim, wherein the graphic code is stored on a data medium, e.g. printed on paper or saved on a USB stick or hard disk or on a data medium.

8. Method according to any previous claim, wherein the portable electronic device is a mobile phone or a smartphone or a tablet.

9. Injection molding press comprising:
a memory,
an electronic control unit connected to the memory to access the data in the memory and programmed for
processing the data to perform the molding process, and
communicating said data between the memory and the outside of the press by means of a graphic code readable by an electronic device.

10. Press according to claim 9, comprising an electronic device adapted to read said graphic code, e.g. a bar code reader or QR code reader.

11. Press according to claim 9 or 10, comprising means adapted to generate said graphic code and/or means adapted to display said graphic code.

12. Method or press according to any previous claim, wherein the graphic code is a barcode, a QR code or an image.

13. Software program comprising instructions that, when loaded and executed on a microprocessor of the press, perform the method according to claims 1, 2, 5-7 and 12.

14. Software program according to claim 13, **characterized by** being embedded into a simulation software for an injection molding process.

15. Software program according to claim 13, **characterized by** being stored in a local memory in the portable device.

## Patentansprüche

1. Verfahren zum Verwalten von Daten, die sich auf einen Spritzgussprozess beziehen und in einem Speicher einer an Bord einer Spritzpresse angeordneten elektronischen Steuereinheit gespeichert sind, wobei die elektronische Steuereinheit die Daten verarbeitet, um den Formprozess durchzuführen,
**dadurch gekennzeichnet dass**,
der Schritt des Übermittelns der Daten zwischen dem Speicher und der Außenseite der Presse mittels eines von einem elektronischen Gerät lesbaren Grafikcodes.

2. Verfahren nach Anspruch 1, wobei der Schritt des Kommunizierens den Schritt des Lesens von Daten aus dem Speicher, des Kodierens dieser in den Grafikcode und des Verfügbarmachens des Grafikcodes außerhalb der Presse umfasst.

3. Verfahren nach Anspruch 1 oder 2, wobei der Schritt des Kommunizierens den Schritt des Dekodierens des von einem elektronischen Gerät lesbaren Grafikcodes, des Extrahierens von Daten daraus und des Schreibens der extrahierten Daten in den Speicher umfasst.

4. Verfahren nach einem der vorhergehenden Ansprüche, umfassend den Schritt des Erfassens und/oder Empfangens des Grafikcodes und/oder der darin enthaltenen Daten mittels eines tragbaren elektronischen Geräts außerhalb der Presse.

5. Verfahren nach einem der vorhergehenden Ansprüche, wobei der generierte Grafikcode auf einem Display der Presse, z. B. einem Monitor oder einem Touchscreen, angezeigt wird.

6. Verfahren nach einem der vorhergehenden Ansprüche, mit den zusätzlichen Schritten:
- Aufteilung der internen Daten bzw. der Parameter in Untergruppen,
- Generieren von n, n > 1, Grafikcodes oder QR-Codes und Kodieren einer Untergruppe interner Daten oder Parameter in jedem n-ten Code und
- Ausgeben der n Codes nacheinander und/oder zyklisch.

7. Verfahren nach einem der vorhergehenden Ansprüche, wobei der Grafikcode auf einem Datenträger gespeichert, beispielsweise auf Papier ausgedruckt oder auf einem USB-Stick oder einer Festplatte oder einem Datenträger gespeichert wird.

8. Verfahren nach einem der vorhergehenden Ansprüche, wobei das tragbare elektronische Gerät ein Mobiltelefon oder ein Smartphone oder ein Tablet ist.

9. Spritzgusspresse, umfassend:
eine Erinnerung,
eine elektronische Steuereinheit, die mit dem Speicher verbunden ist, um auf die Daten im Speicher zuzugreifen und programmiert ist für
Verarbeiten der Daten zur Durchführung des Formprozesses und
Übermitteln der Daten zwischen dem Speicher und der Außenseite der Presse mittels eines von einem elektronischen Gerät lesbaren Grafikcodes.

10. Presse nach Anspruch 9, umfassend ein elektronisches Gerät zum Lesen des Grafikcodes, beispielsweise einen Strichcodeleser oder einen QR-Codeleser.

11. Presse nach Anspruch 9 oder 10, die Mittel zum Erzeugen des Grafikcodes und/oder Mittel zum Anzeigen des Grafikcodes umfasst.

12. Verfahren oder Presse nach einem der vorhergehenden Ansprüche, wobei der Grafikcode ein Barcode, ein QR-Code oder ein Bild ist.

13. Softwareprogramm mit Anweisungen, die, wenn sie geladen und auf einem Mikroprozessor der Presse ausgeführt werden, das Verfahren gemäß den Ansprüchen 1, 2, 5-7 und 12 ausführen.

14. Softwareprogramm nach Anspruch 13, **dadurch gekennzeichnet, dass** die Einbettung in eine Simulationssoftware für einen Spritzgussprozess.

15. Softwareprogramm nach Anspruch 13, **dadurch gekennzeichnet, dass** es in einem lokalen Speicher im tragbaren Gerät gespeichert ist.

## Revendications

1. Procédé de gestion de données relatives à un processus de moulage par injection contenues dans une mémoire d'une unité de commande électronique placée à bord d'une presse à injection, l'unité de commande électronique traitant les données pour réaliser le processus de moulage,
**caractérisé en ce que**
l'étape de communication desdites données entre la mémoire et l'extérieur de la presse au moyen d'un code graphique lisible par un dispositif électronique.

2. Procédé selon la revendication 1, dans lequel ladite étape de communication comprend l'étape de lire les données de la mémoire, de les coder dans ledit code graphique et de rendre le code graphique disponible à l'extérieur de la presse.

3. Procédé selon la revendication 1 ou 2, dans lequel ladite étape de communication comprend l'étape de décoder ledit code graphique lisible par un dispositif électronique, d'en extraire des données et d'écrire les données extraites dans la mémoire.

4. Procédé selon l'une quelconque des revendications précédentes, comprenant l'étape d'acquisition et/ou de réception du code graphique et/ou des données qu'il contient au moyen d'un dispositif électronique portable externe à la presse.

5. Procédé selon l'une quelconque des revendications précédentes, dans lequel le code graphique généré est présenté sur un écran de la presse, par exemple un moniteur ou un écran tactile.

6. Procédé selon l'une quelconque des revendications précédentes, avec les étapes supplémentaires de :
- partitionner les données internes ou les paramètres en sous-groupes,
- générer n, n > 1, codes graphiques ou codes QR et coder dans chaque n-ième code un sous-groupe de données ou paramètres internes, et
- émettre les n codes en séquence et/ou cycliquement.

7. Procédé selon l'une quelconque des revendications précédentes, dans lequel le code graphique est stocké sur un support de données, par exemple imprimé sur papier ou sauvegardé sur une clé USB ou un disque dur ou sur un support de données.

8. Procédé selon l'une quelconque des revendications précédentes, dans lequel l'appareil électronique portable est un téléphone mobile ou un smartphone ou une tablette.

9. Presse à injecter comprenant:
un mémoire,
une unité de commande électronique connectée à la mémoire pour accéder aux données dans la mémoire et programmée pour
traiter les données pour effectuer le processus de moulage, et
communiquer lesdites données entre la mémoire et l'extérieur de la presse au moyen d'un code graphique lisible par un dispositif électronique.

10. Presse selon la revendication 9, comprenant un dispositif électronique adapté à lire ledit code graphique, par exemple un lecteur de code barre ou un lecteur de code QR.

11. Presse selon la revendication 9 ou 10, comprenant des moyens adaptés pour générer ledit code graphique et/ou des moyens adaptés pour afficher ledit code graphique.

12. Procédé ou presse selon l'une quelconque des revendications précédentes, dans lequel le code graphique est un code barre, un QR code ou une image.

13. Programme logiciel comprenant des instructions qui, lorsqu'elles sont chargées et exécutées sur un microprocesseur de la presse, exécutent le procédé selon les revendications 1, 2, 5 à 7 et 12.

14. Programme logiciel selon la revendication 13, **caractérisé en ce qu'**il est intégré dans un logiciel de simulation pour un processus de moulage par injection.

15. Programme logiciel selon la revendication 13, **caractérisé par le fait qu'**il est stocké dans une mémoire locale du dispositif portable.
